# FASCICULE DE BREVET EUROPEEN

(11) **EP 3 721 758 B1**
(45) Date de publication et mention de la délivrance du brevet: **17.11.2021**
(21) Numéro de dépôt: 20164367.3
(22) Date de dépôt: 19.03.2020
(51) Int. Cl.: A47J 31/52, A47J 36/32, A47J 43/07

(54) **APPAREIL ÉLECTROMÉNAGER**
ELEKTROHAUSHALTSGERÄT
HOUSEHOLD APPLIANCE

(30) Priorité: 29.03.2019 FR 1903414
(43) Date de publication de la demande: 14.10.2020
(73) Titulaire: SEB S.A., 69130 Ecully (FR)
(72) Inventeur: CALLENS, Edouard, 38200 VIENNE (FR); SAUNIER, Christophe, 38270 PRIMARETTE (FR)
(74) Mandataire: SEB Développement

(56) Documents cités:
- WO-A1-2015/162421
- WO-A1-2018/024913
- US-A1- 2014 202 591
- US-A1- 2018 303 283

## Description

La présente invention concerne de manière générale un appareil électroménager, tel qu'un appareil de préparation culinaire, un robot de cuisine, un appareil de préparation de boissons, tel qu'une cafetière.

### État de la technique

Il est connu dans l'art antérieur des appareils électroménagers équipés de dispositifs de détection de présence ou de proximité sans contact, tels que ceux décrits dans les documents EP1761729A2, ou EP2925199A1, ou encore EP2986552A1. Cependant, ces appareils utilisent des caméras ou des solutions complexes ce qui augmente le coût et nécessite des logiciels de traitement sophistiqués. Ces appareils ne proposent pas forcément une interaction aisée et intuitive à l'utilisateur. Enfin l'encombrement des solutions par caméra ou appareil photo est important, ce qui va à l'encontre du besoin en appareils de petite taille. Le document WO2018/024913 divulgue les caractéristiques techniques du préambule de la revendication 1.

Un but de la présente invention est de répondre aux inconvénients de l'art antérieur mentionnés ci-dessus et en particulier, de proposer un appareil électroménager qui permette une détection de présence ou de proximité sans contact et une expérience utilisateur aisée et intuitive, tout en restant de petite taille et économique à fabriquer.

Pour cela, un premier aspect de l'invention concerne un appareil électroménager, comprenant :
- une interface homme machine,
- un premier capteur de détection sans contact d'une présence ou d'une proximité avec un utilisateur,
- un deuxième capteur de détection sans contact d'une présence ou d'une proximité avec l'utilisateur,
caractérisé en ce que :
- le premier capteur de détection sans contact est agencé pour détecter une présence ou une proximité avec l'utilisateur dans une première zone spatiale au moins partiellement agencée en regard de l'interface homme machine,
- le deuxième capteur de détection sans contact est agencé pour détecter une présence ou une proximité avec l'utilisateur dans une deuxième zone spatiale au moins partiellement agencée en regard de l'interface homme machine et comprenant au moins une portion distincte de la première zone spatiale. L'appareil électroménager selon la mise en oeuvre ci-dessus présente au moins deux capteurs de détection de présence sans contact, agencés pour détecter chacun une zone en regard d'une interface homme machine, avec chacun une zone spécifique, si bien que des scénarios de gestuelles particulières peuvent être envisagés pour améliorer l'ergonomie d'utilisation, avec des gestes reconnus en séquence (par l'un puis par l'autre des capteurs), en simultané (à la fois par les deux capteurs), ou de manière isolée.

Avantageusement, l'interface homme machine comprend un écran afficheur, et :
- la première zone spatiale est au moins partiellement agencée en regard de l'écran afficheur,
- la deuxième zone spatiale est au moins partiellement agencée en regard de l'écran afficheur.

Avantageusement, au moins l'un, du premier capteur de détection sans contact et/ou du deuxième capteur de détection sans contact est distinct de l'interface homme machine, de préférence de l'écran afficheur. De préférence le premier capteur de détection sans contact et le deuxième capteur de détection sans contact sont distincts de l'interface homme machine, de préférence de l'écran afficheur. Selon un premier exemple, le premier capteur de détection sans contact et/ou le deuxième capteur de détection sans contact est agencé dans une zone distincte de l'interface homme machine, de préférence de l'écran afficheur. De manière additionnelle ou alternative, le premier capteur de détection sans contact et/ou le deuxième capteur de détection sans contact est distinct de la structure de l'interface homme machine, de préférence de l'écran afficheur. En d'autres termes, le premier capteur de détection sans contact et/ou le deuxième capteur de détection sans contact n'est pas un capteur capacitif intégré à l'interface homme machine, de préférence à l'écran afficheur. Avantageusement, au moins l'un, du premier capteur de détection sans contact et/ou du deuxième capteur de détection sans contact est un capteur de mesure de profondeur spatiale, mesurant de préférence un temps de vol d'une illumination infrarouge entre une source de lumière infrarouge, l'utilisateur et ledit capteur, pour en déduire au moins une distance entre un membre de l'utilisateur et ledit capteur. Autrement dit, les capteurs sont des capteurs infrarouges utilisant la technique du « temps de vol » ou « Time Of flight » en langue anglaise (TOF). Pour ce faire, les capteurs TOF illuminent la scène et les objets mesurés par un rayon de lumière, et calculent le temps que ce rayon prend pour effectuer le trajet entre l'objet et le capteur. Le temps de vol de ce rayon est directement proportionnel à la distance entre le capteur et l'objet mesuré. Cette mesure de temps de vol est effectuée indépendamment par chaque pixel du capteur, permettant ainsi d'obtenir une distance avec l'objet, et/ou une image complète en 3D de l'objet mesuré.

Avantageusement, l'interface homme machine, de préférence l'écran afficheur, est agencé entre le premier capteur de détection sans contact et le deuxième capteur de détection sans contact. Cela permet de bien séparer les deux zones spatiales de mesure tout en ayant une zone globale de détection qui couvre tout l'écran.

Avantageusement :
- la première zone spatiale est au moins en regard d'un premier bord de l'interface homme machine, de préférence de l'écran afficheur,
- la deuxième zone spatiale est au moins en regard d'un deuxième bord de l'interface homme machine, de préférence de l'écran afficheur, de préférence opposé au premier bord.

Avantageusement, le premier capteur de détection sans contact et le deuxième capteur de détection sans contact sont agencés pour détecter de manière séquentielle un membre de l'utilisateur faisant un geste de balayage en regard de l'interface homme machine, de préférence de l'écran afficheur, de sorte à déduire au moins un sens du mouvement de balayage. On entend par détection séquentielle une détection d'abord par un capteur, puis par un autre. En effet, lors d'un balayage, l'utilisateur va d'abord passer dans la zone spatiale spécifique à l'un des capteurs, puis ensuite dans l'autre zone spatiale spécifique, si bien que l'on peut en déduire le sens de balayage. Cela peut provoquer par exemple le passage d'une page à une autre sur l'écran afficheur, dans le même sens que le sens de balayage.

Avantageusement, le premier capteur de détection sans contact et le deuxième capteur de détection sans contact sont agencés pour détecter de manière simultanée un membre de l'utilisateur faisant un geste d'approche ou d'éloignement en regard d'au moins une portion, de préférence centrale, de l'interface homme machine, de préférence de l'écran afficheur, de sorte à déduire au moins une gestuelle d'approche ou d'éloignement normale à l'interface homme machine, de préférence à l'écran afficheur. Cette mise en oeuvre permet de facilement détecter l'utilisateur qui avance et recule par exemple sa main de l'afficheur, pour provoquer par exemple la prise en compte d'une commande de validation.

Avantageusement, l'interface homme machine, de préférence l'écran afficheur, présente une première dimension et une deuxième dimension de préférence inférieure à la première dimension, et:
- la première zone spatiale comprend au moins une région agencée en regard de l'interface homme machine, de préférence de l'écran afficheur, orientée au moins selon la première dimension. En d'autres termes, l'interface homme machine, de préférence l'écran afficheur est allongée, et la zone spatiale du premier capteur de détection sans contact couvre l'afficheur sur toute sa longueur.

Avantageusement :
- le premier capteur de détection sans contact est agencé pour détecter, selon une direction de la première dimension de l'interface homme machine, de préférence de l'écran afficheur, une position d'un membre de l'utilisateur dans la première zone spatiale,
- l'écran afficheur est agencé pour afficher un curseur ou un repère à une position selon la première dimension de l'interface homme machine, de préférence de l'écran afficheur, calculée en fonction de la position selon la direction de la première dimension de l'interface homme machine, de préférence de l'écran afficheur, du membre de l'utilisateur dans la première zone spatiale. On peut envisager, selon cette mise en œuvre optionnelle, de régler et de donner un retour d'information sur le réglage d'une température, d'un degré de concentration d'une boisson, d'un volume de boisson, et cela sans contact, en déplaçant le curseur dans une position de réglage désirée, ce déplacement étant assuré par le mouvement d'un doigt de l'utilisateur en regard d'un point de l'écran situé entre deux limites.

Avantageusement, l'écran afficheur est agencé pour déplacer le curseur ou le repère en regard du membre de l'utilisateur détecté dans la première zone spatiale.

Avantageusement, la première zone spatiale est comprise entre deux plans perpendiculaires à l'interface homme machine, de préférence à l'écran afficheur, et à la première dimension, et distants l'un de l'autre d'au moins la première dimension de l'interface homme machine, de préférence de l'écran afficheur.

Avantageusement, la deuxième zone spatiale couvre au moins une zone agencée en regard de l'appareil électroménager et le long d'un plan perpendiculaire à l'interface homme machine, de préférence à l'écran afficheur. En d'autres termes, selon cette mise en œuvre optionnelle, le deuxième capteur de détection sans contact effectue une détection selon une direction normale à l'interface homme machine, de préférence à l'écran afficheur, et mesure typiquement une distance entre l'utilisateur et l'interface homme machine, de préférence entre l'utilisateur et l'écran afficheur.

Avantageusement, chacun du premier capteur de détection sans contact et du deuxième capteur de détection sans contact est agencé pour détecter une présence ou une proximité de l'utilisateur dans une zone comprise entre l'interface homme machine, de préférence entre l'écran afficheur, et un plan parallèle à l'interface homme machine, de préférence à l'écran afficheur, situé à moins de 7 cm de l'interface homme machine, de préférence de l'écran afficheur, préférentiellement à moins de 5 cm de l'interface homme machine, de préférence de l'écran afficheur, et plus préférentiellement à moins de 3 cm de l'interface homme machine, de préférence de l'écran afficheur.

Avantageusement :
- le premier capteur de détection sans contact est agencé pour détecter une présence ou une proximité de l'utilisateur dans une zone comprise entre l'interface homme machine, de préférence entre l'écran afficheur, et un plan parallèle à l'interface homme machine, de préférence à l'écran afficheur, situé à moins de 7 cm de l'interface homme machine, de préférence de l'écran afficheur, préférentiellement à moins de 5 cm de l'interface homme machine, de préférence de l'écran afficheur, et plus préférentiellement à moins de 3 cm de l'interface homme machine, de préférence de l'écran afficheur,
- le deuxième capteur de détection sans contact est agencé pour détecter une présence ou une proximité de l'utilisateur dans une zone située au-delà d'un plan parallèle à l'interface homme machine, de préférence à l'écran afficheur, situé à plus de 3 cm de l'interface homme machine, de préférence de l'écran afficheur, préférentiellement à plus de 5 cm de l'interface homme machine, de préférence de l'écran afficheur, et plus préférentiellement à plus de 7 cm de l'interface homme machine, de préférence de l'écran afficheur.

Avantageusement, l'appareil électroménager comprend une unité de commande et au moins un actionneur, l'unité de commande étant agencée pour commander ledit au moins un actionneur en fonction d'une présence ou d'une proximité avec l'utilisateur, détectée par le premier capteur de détection sans contact et/ou le deuxième capteur de détection sans contact.

Avantageusement, l'unité de commande est agencée pour ajuster la commande dudit au moins un actionneur en fonction d'une distance mesurée entre le membre de l'utilisateur et au moins l'un du premier capteur de détection sans contact et/ou du deuxième capteur de détection sans contact. Selon cette mise en œuvre, la commande est proportionnelle à la distance mesurée.

Avantageusement, l'interface homme machine, de préférence l'écran afficheur, présente une forme allongée.

Avantageusement, le premier capteur de détection sans contact est agencé sur un bord formant une largeur de l'interface homme machine, de préférence de l'écran afficheur, de sorte à mesurer une position d'un membre selon une direction de la longueur de l'interface homme machine, de préférence de l'écran afficheur.

Avantageusement, la première zone spatiale comprend une région commune avec la deuxième zone spatiale.

Avantageusement, la première zone spatiale est totalement distincte de la deuxième zone spatiale.

Avantageusement, l'appareil électroménager est un appareil de préparation de boissons, telles que des boissons chaudes.

Avantageusement, une température, une concentration ou un volume de la boisson chaude est adapté en fonction d'une présence ou d'une proximité d'un membre de l'utilisateur avec l'interface homme machine, de préférence avec l'écran afficheur, détectée par au moins l'un du premier capteur de détection sans contact et/ou du deuxième capteur de détection sans contact.

Avantageusement, l'appareil électroménager est un appareil de préparation culinaire.

Avantageusement, une étape de cuisson, une transition entre deux affichages de pages de recette, une température de cuisson, une étape de préparation d'aliments, une temporisation, est adaptée en fonction d'une présence ou d'une proximité d'un membre de l'utilisateur avec l'interface homme machine, de préférence avec l'écran afficheur, détectée par au moins l'un du premier capteur de détection sans contact et/ou du deuxième capteur de détection sans contact.

### Description des dessins

D'autres caractéristiques et avantages de la présente invention apparaîtront plus clairement à la lecture de la description détaillée qui suit, décrivant un mode de réalisation de l'invention donné à titre d'exemple nullement limitatif et illustré par les dessins annexés, dans lesquels :
La figure 1 représente un premier exemple d'appareil électroménager selon l'invention, comprenant un écran et des capteurs de détection sans contact ;
La figure 2 représente un deuxième exemple d'appareil électroménager selon l'invention, comprenant un écran et des capteurs de détection sans contact ;
La figure 3 représente un troisième exemple d'appareil électroménager selon l'invention, comprenant un écran et des capteurs de détection sans contact ;
La figure 4 représente un détail de l'écran et des capteurs de l'appareil de la figure 1 ;
La figure 5 représente une vue de dessus de l'appareil de la figure 1, selon un premier exemple de fonctionnement des capteurs de détection sans contact ;
La figure 6 représente une vue de dessus de l'appareil de la figure 1, selon un deuxième exemple de fonctionnement des capteurs de détection sans contact ;
La figure 7 représente des exemples d'utilisation de l'appareil électroménager de la figure 1.
La figure 8 montre des exemples de gestuelles de l'utilisateur pour interagir avec l'interface homme machine.

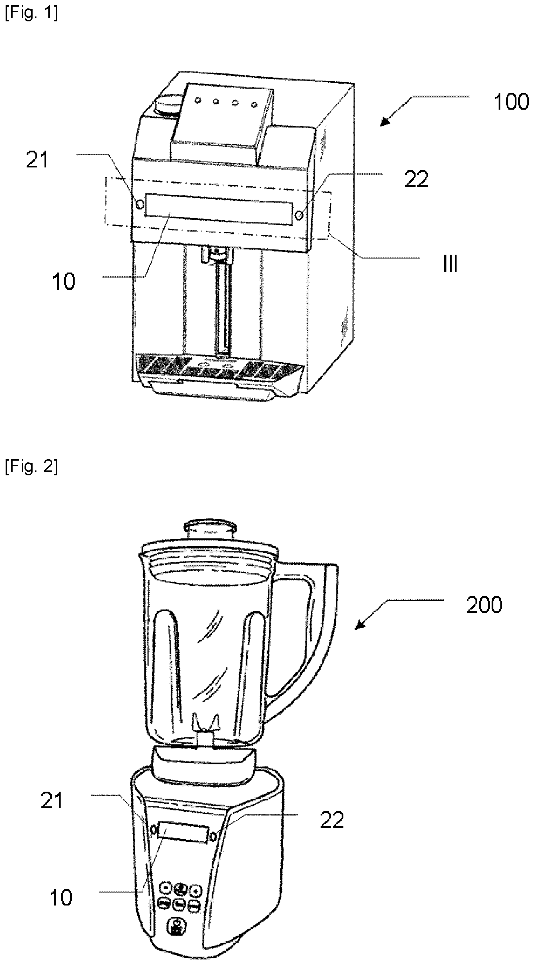

La figure 1 représente un appareil électroménager 100, avec une interface homme machine comprenant notamment un écran 10 et deux capteurs de détection sans contact 21 et 22, d'une présence ou d'une proximité d'un utilisateur.

Typiquement, l'appareil électroménager 100 est un appareil de préparation de boissons chaudes, et se présente en particulier sous la forme d'un appareil électroménager de préparation de café. On peut cependant envisager un appareil de préparation de thé, de soupe, de distribution d'eau gazeuse...

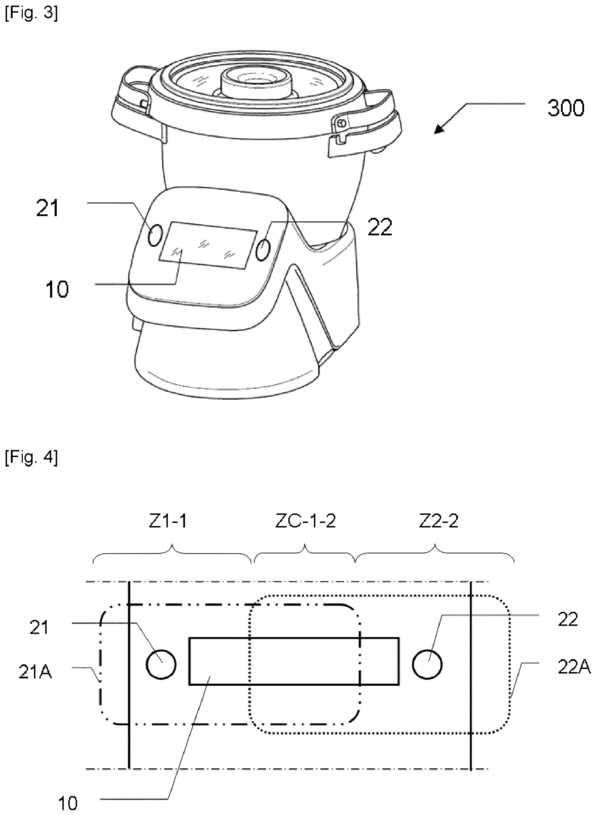

L'écran 10 est agencé sur une façade avant de l'appareil électroménager 100, pour afficher des informations à l'attention d'un utilisateur. Il présente une forme allongée selon une direction horizontale, et est entouré de deux capteurs de détection sans contact 21 et 22, qui permettent de détecter des gestes de l'utilisateur pour commander l'appareil électroménager 100, comme cela sera expliqué ci-dessous aux paragraphes relatifs à la figure 4.

La figure 2 représente un deuxième appareil électroménager 200, typiquement ici un appareil de préparation culinaire. On peut envisager un robot de découpe, de mélange, mais aussi un robot de préparation et de cuisson...

Comme pour l'appareil électroménager de la figure 1, l'appareil électroménager 200 est équipé d'un écran 10 et de deux capteurs de détection sans contact 21 et 22, d'une présence ou d'une proximité d'un utilisateur. Ici encore, l'écran 10 est agencé sur une façade avant de l'appareil électroménager 200, pour afficher des informations à l'attention d'un utilisateur, il présente une forme allongée selon une direction horizontale, et est entouré de deux capteurs de détection sans contact 21 et 22, qui permettent de détecter des gestes de l'utilisateur pour commander l'appareil électroménager 200, comme cela sera expliqué ci-dessous aux paragraphes relatifs à la figure 4.

La figure 3 représente un troisième appareil électroménager 300, typiquement ici un appareil de préparation culinaire avec fonctions de préparation et de cuisson, c'est-à-dire un robot de préparation et de cuisson...

Comme pour les appareils électroménagers de la figure 1 et 2, l'appareil électroménager 300 est équipé d'un écran 10 et de deux capteurs de détection sans contact 21 et 22, d'une présence ou d'une proximité d'un utilisateur. Ici encore, l'écran 10 est agencé sur une façade avant de l'appareil électroménager 300, pour afficher des informations à l'attention d'un utilisateur, il est entouré de deux capteurs de détection sans contact 21 et 22, qui permettent de détecter des gestes de l'utilisateur pour commander l'appareil électroménager 300, comme cela sera expliqué ci-dessous aux paragraphes relatifs à la figure 4.

La figure 4 représente une vue agrandie de l'écran 10 de l'appareil électroménager de la figure 1. Les explications ci-dessous sont également valables pour l'appareil électroménager 200 de la figure 2, ou encore pour l'appareil électroménager 300 de la figure 3.

En particulier, l'écran 10 est agencé en partie centrale de l'appareil électroménager 100. Un premier capteur de détection sans contact 21 est agencé à gauche de l'écran 10, et un deuxième capteur de détection sans contact 22 est agencé à droite de l'écran 10.

Selon un mode réalisation préféré mais non limitatif, les capteurs de détection sans contact 21 et 22 sont des capteurs infrarouges de détection sans contact. En particulier, on peut utiliser des capteurs de détection sans contact basés sur la technologie « temps de vol » ou « time of flight » en langue anglaise, abrégé dans la suite TOF. Ces capteurs de détection sans contact permettent de détecter une présence ou une proximité avec un utilisateur en calculant le temps de trajet aller-retour entre le capteur et l'utilisateur.

Selon une mise en œuvre, les capteurs TOF illuminent la scène et les objets mesurés par un rayon de lumière, et calculent le temps que ce rayon prend pour effectuer le trajet entre l'objet et le capteur. Le temps de vol de ce rayon est directement proportionnel à la distance entre le capteur et l'objet mesuré. Cette mesure de temps de vol est effectuée indépendamment par chaque pixel du capteur, permettant ainsi d'obtenir une distance avec l'objet, et/ou une image complète en 3D de l'objet mesuré.

Sur la figure 4, les capteurs de détection sans contact 21 et 22 sont visibles, mais on peut les agencer sous une paroi par exemple opaque au rayonnement visible, mais transparente aux rayons infrarouges. Ainsi la façade de l'appareil est uniforme et les capteurs de détection sans contact sont invisibles.

La figure 4 montre le premier capteur de détection sans contact 21, agencé pour détecter une présence ou une proximité avec l'utilisateur dans une première zone spatiale 21A au moins partiellement agencée en regard de l'écran afficheur 10, figurée en trait mixte double point. Le deuxième capteur sans contact 22 est quant à lui agencé pour détecter une présence ou une proximité avec l'utilisateur dans une deuxième zone spatiale 22A également au moins partiellement agencée en regard de l'écran afficheur 10, et figurée en trait pointillé.

Sur la figure 4, la deuxième zone spatiale 22A est plus large ou haute que la première zone spatiale 21A pour des raisons de clarté, mais on peut très bien avoir la même hauteur, ou des hauteurs et longueur/largeur différentes pour la deuxième zone spatiale 22A et la première zone spatiale 21A.

Cependant, il est important de noter que chaque zone spatiale 21A et 22A présente une partie propre, qui n'est pas en commun avec l'autre zone spatiale 22A ou 21A respectivement.

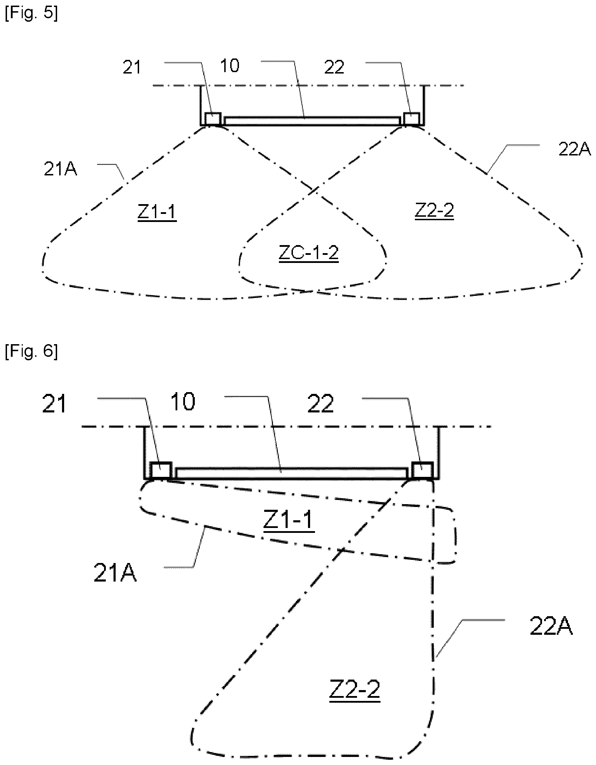

En particulier, comme le montrent la figure 4 (vue de face de l'appareil électroménager 100) et la figure 5 (vue de dessus de l'appareil électroménager 100), la zone Z1-1 est uniquement couverte par le premier capteur de détection sans contact 21, et la zone Z2-2 est uniquement couverte par le deuxième capteur de détection sans contact 22. De plus, une zone centrale ZC-1-2 de l'écran 10 est couverte par les deux capteurs de détection sans contact 21 et 22.

En conséquence, chaque capteur de détection sans contact est capable par exemple de détecter de manière séquentielle un geste de balayage effectué devant l'écran 10 par l'utilisateur. Il est alors possible de détecter un sens du mouvement de balayage. Par exemple, un balayage de la gauche vers la droite sera d'abord détecté par le capteur de détection sans contact 21, puis ensuite par le capteur de détection sans contact 22. Un tel balayage peut par exemple servir à ajuster la position d'un curseur sur l'écran 10, ou à passer d'une page d'affichage de menu à une autre.

De plus, il est aussi tout à fait possible de détecter de manière simultanée par les deux capteurs de détection sans contact 21 et 22 un geste de l'utilisateur qui avance et/ou recule sa main face à l'écran 10, si bien qu'un tel mouvement peut commander une confirmation de commande par exemple.

Par ailleurs, en plus de détecter une proximité ou une présence, les capteurs de détection sans contact peuvent aussi mesurer une distance précise entre l'utilisateur et l'appareil, si bien qu'il est aussi possible de mesurer une position d'un doigt en regard de l'écran et de positionner un curseur de réglage sur l'écran, en regard du doigt, pour régler par exemple une température, un volume, un temps, une concentration, un degré de préparation, et de commander ensuite l'appareil en conséquence.

La figure 6 montre une alternative de fonctionnement des capteurs de détection sans contact 21et 22, par rapport à la figure 5. Dans ce deuxième exemple, le premier capteur de détection sans contact 21 couvre une première zone spatiale 21A qui s'étend le long de l'écran afficheur 10, tandis que le deuxième capteur de détection sans contact 22 couvre une deuxième zone spatiale 22A qui s'étend sur une zone perpendiculaire à l'écran afficheur 10.

En conséquence, le premier capteur de détection sans contact 21 permet de mesurer une position d'un doigt en regard de l'écran et de positionner un curseur de réglage sur l'écran, en regard du doigt, pour régler par exemple une température, un volume, un temps, une concentration, un degré de préparation, et de commander ensuite l'appareil en conséquence, si l'utilisateur fait un geste d'approche de l'écran, détecté par le deuxième capteur de détection sans contact 22.

Ainsi, l'utilisateur peut confirmer des commandes, piloter l'appareil, provoquer un défilement de pages d'affichage sur l'écran 10, sans toucher ce dernier, avec une grande variété de gestes.

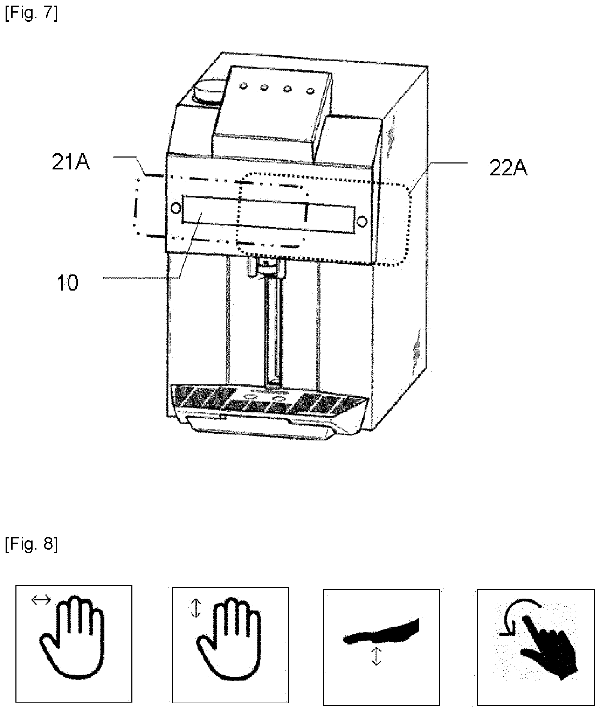

La figure 7 représente l'appareil électroménager 100 de la figure 1, avec les deux zones spatiales 21A et 22A, et la figure 8 montre des exemples de gestuelles de l'utilisateur possibles pour interagir avec l'interface homme machine, de préférence avec l'écran afficheur. De gauche à droite, on peut envisager de détecter un balayage horizontal, un balayage vertical, un mouvement d'avance et de recul vers l'écran, et enfin un mouvement de rotation.

Par exemple pour un appareil de préparation de boissons chaudes tel que celui illustré à la figure 1, on peut régler une température d'eau, un volume de boisson, ou encore un degré de concentration...

Pour un appareil de préparation culinaire tel que celui illustré à la figure 2, on peut aisément prévoir de régler une vitesse de découpe ou de mélange, ou encore un temps de préparation...

Pour un appareil de préparation culinaire tel que celui illustré à la figure 3, on peut aisément prévoir de régler une vitesse de mélange, de faire défiler des pages de menu ou des étapes de recette, de valider le début ou l'arrêt de la cuisson, ou encore de régler une température de cuisson...

On comprendra que diverses modifications et/ou améliorations évidentes pour l'homme du métier peuvent être apportées aux différents modes de réalisation de l'invention décrits dans la présente description sans sortir du cadre de l'invention.

En particulier, il est fait référence à deux capteurs de détection sans contact agencés de part et d'autre de l'écran afficheur, mais on peut envisager plus de capteurs de détection sans contact, en particulier quatre capteurs de détection sans contact, chacun sur un bord de l'écran. Cependant, on peut envisager trois, cinq ou plus de capteurs.

De plus, l'écran est agencé de préférence entre les capteurs de détection sans contact, mais on peut envisager d'autres positions relatives, telles que les deux capteurs de détection sans contact du même côté, ou sur deux bords successifs...

Par ailleurs, l'invention porte sur un appareil électroménager équipé d'un écran et de capteurs de détection sans contact, mais cela n'exclut pas de prévoir aussi des commandes tactiles ou mécaniques sur un tel appareil. En effet, il est mentionné que l'appareil comprend une interface homme machine, et celle-ci peut comprendre un écran afficheur, mais aussi des boutons poussoirs, ou même une zone "cible" matérialisée par un simple marquage indiquant à l'utilisateur où déplacer ses doigts / mains pour effectuer une commande sans contact.

Enfin, il est fait mention de capteurs "temps de vol" ou "Time Of Flight", mais on peut utiliser des capteurs infrarouges, laser, à ultrasons... à titre d'alternative.

## Revendications

1. Appareil électroménager, comprenant :
- une interface homme machine,
- un premier capteur de détection sans contact (21) d'une présence ou d'une proximité avec un utilisateur,
- un deuxième capteur de détection sans contact (22) d'une présence ou d'une proximité avec l'utilisateur,
**caractérisé en ce que** :
- le premier capteur de détection sans contact (21) est agencé pour détecter une présence ou une proximité avec l'utilisateur dans une première zone spatiale (21A) au moins partiellement agencée en regard de interface homme machine ,
- le deuxième capteur de détection sans contact (22) est agencé pour détecter une présence ou une proximité avec l'utilisateur dans une deuxième zone spatiale (22A) au moins partiellement agencée en regard de l'interface homme machine et comprenant au moins une portion distincte de la première zone spatiale (21A).

2. Appareil électroménager selon la revendication précédente, dans lequel l'interface homme machine comprend un écran afficheur (10), et dans lequel :
- la première zone spatiale (21A) est au moins partiellement agencée en regard de l'écran afficheur (10),
- la deuxième zone spatiale (22A) est au moins partiellement agencée en regard de l'écran afficheur (10).

3. Appareil électroménager selon l'une des revendications précédentes, dans lequel l'interface homme machine est agencée entre le premier capteur de détection sans contact (21) et le deuxième capteur de détection sans contact (22).

4. Appareil électroménager selon l'une des revendications précédentes, dans lequel :
- la première zone spatiale (21A) est au moins en regard d'un premier bord de l'interface homme machine,
- la deuxième zone spatiale (22A) est au moins en regard d'un deuxième bord de l'interface homme machine, de préférence opposé au premier bord.

5. Appareil électroménager selon l'une des revendications précédentes, dans lequel le premier capteur de détection sans contact (21) et le deuxième capteur de détection sans contact (22) sont agencés pour détecter de manière séquentielle un membre de l'utilisateur faisant un geste de balayage en regard de l'interface homme machine, de sorte à déduire au moins un sens du mouvement de balayage.

6. Appareil électroménager selon l'une des revendications précédentes, dans lequel le premier capteur de détection sans contact (21) et le deuxième capteur de détection sans contact (22) sont agencés pour détecter de manière simultanée un membre de l'utilisateur faisant un geste d'approche ou d'éloignement en regard d'au moins une portion, de préférence centrale, de l'interface homme machine, de sorte à déduire au moins une gestuelle d'approche ou d'éloignement normale à l'interface homme machine.

7. Appareil électroménager selon l'une des revendications 1 à 4, dans lequel l'interface homme machine présente une première dimension et une deuxième dimension de préférence inférieure à la première dimension, et dans lequel :
- la première zone spatiale (21A) comprend au moins une région agencée en regard de l'interface homme machine, orientée au moins selon la première dimension.

8. Appareil électroménager selon la revendication précédente, dans sa dépendance à la revendication 2 dans lequel :
- le premier capteur de détection sans contact (21) est agencé pour détecter, selon une direction de la première dimension de l'interface homme machine, une position d'un membre de l'utilisateur dans la première zone spatiale (21A),
- l'écran afficheur (10) est agencé pour afficher un curseur ou un repère à une position selon la première dimension de l'interface homme machine, calculée en fonction de la position selon la direction de la première dimension de l'interface homme machine du membre de l'utilisateur dans la première zone spatiale (21A).

9. Appareil électroménager selon la revendication précédente, dans lequel l'interface homme machine est agencée pour déplacer le curseur ou le repère en regard du membre de l'utilisateur détecté dans la première zone spatiale (21A).

10. Appareil électroménager selon la revendication 7 dans sa dépendance à la revendication 2, ou selon l'une des revendications 8 à 9, dans lequel la première zone spatiale (21A) est comprise entre deux plans perpendiculaires à l'écran afficheur (10) et à la première dimension, et distants l'un de l'autre d'au moins la première dimension de l'interface homme machine.

11. Appareil électroménager selon la revendication 7 dans sa dépendance à la revendication 2, ou selon l'une des revendications 8 à 10, dans lequel la deuxième zone spatiale (22A) couvre au moins une zone agencée en regard de l'appareil électroménager et le long d'un plan perpendiculaire à l'interface homme machine.

12. Appareil électroménager selon l'une des revendications 1 à 11, dans lequel :
- le premier capteur de détection sans contact (21) est agencé pour détecter une présence ou une proximité de l'utilisateur dans une zone comprise entre l'interface homme machine et un plan parallèle à l'interface homme machine situé à moins de 7 cm de l'interface homme machine, préférentiellement à moins de 5 cm de l'interface homme machine, et plus préférentiellement à moins de 3 cm de l'interface homme machine
- le deuxième capteur de détection sans contact (22) est agencé pour détecter une présence ou une proximité de l'utilisateur dans une zone située au-delà d'un plan parallèle à l'interface homme machine situé à plus de 3 cm de l'interface homme machine, préférentiellement à plus de 5 cm de l'interface homme machine, et plus préférentiellement à plus de 7 cm de l'interface homme machine.

13. Appareil électroménager selon l'une des revendications précédentes, dans lequel au moins l'un, du premier capteur de détection sans contact (21) et/ou du deuxième capteur de détection sans contact (22) est un capteur de mesure de profondeur spatiale, mesurant de préférence un temps de vol d'une illumination infrarouge entre une source de lumière infrarouge, l'utilisateur et ledit capteur, pour en déduire au moins une distance entre un membre de l'utilisateur et ledit capteur.

14. Appareil électroménager selon l'une des revendications précédentes, comprenant une unité de commande et au moins un actionneur, l'unité de commande étant agencée pour commander ledit au moins un actionneur en fonction d'une présence ou d'une proximité avec l'utilisateur, détectée par le premier capteur de détection sans contact (21) et/ou le deuxième capteur de détection sans contact (22).

15. Appareil électroménager selon la revendication précédente, dans lequel l'unité de commande est agencée pour ajuster la commande dudit au moins un actionneur en fonction d'une distance mesurée entre le membre de l'utilisateur et au moins l'un du premier capteur de détection sans contact (21) et/ou du deuxième capteur de détection sans contact (22).

## Patentansprüche

1. Haushaltsgerät, umfassend:
- eine Mensch-Maschine-Schnittstelle,
- einen ersten Sensor zur kontaktlosen Erfassung (21) einer Anwesenheit oder Nähe eines Benutzers,
- einen zweiten Sensor zur kontaktlosen Erfassung (22) einer Anwesenheit oder Nähe eines Benutzers,
**dadurch gekennzeichnet, dass**:
- der erste Sensor zur kontaktlosen Erfassung (21) so eingerichtet ist, dass er eine Anwesenheit oder Nähe des Benutzers in einer ersten räumlichen Zone (21A) erfasst, die zumindest teilweise gegenüber der Mensch-Maschine-Schnittstelle eingerichtet ist,
- der zweite Sensor (22) zur kontaktlosen Erfassung so eingerichtet ist, dass er eine Anwesenheit oder Nähe des Benutzers in einer zweiten räumlichen Zone (22A) erfasst, die zumindest teilweise gegenüber der Mensch-Maschine-Schnittstelle eingerichtet ist und zumindest einen von der ersten räumlichen Zone (21A) unterschiedlichen Abschnitt umfasst.

2. Haushaltsgerät nach dem vorstehenden Anspruch, wobei die Mensch-Maschine-Schnittstelle einen Anzeigebildschirm (10) umfasst, und wobei:
- die erste räumliche Zone (21A) zumindest teilweise gegenüber dem Anzeigebildschirm (10) eingerichtet ist,
- die zweite räumliche Zone (22A) zumindest teilweise gegenüber dem Anzeigebildschirm (10) eingerichtet ist.

3. Haushaltsgerät nach einem der vorstehenden Ansprüche, wobei die Mensch-Maschine-Schnittstelle zwischen dem ersten Sensor zur kontaktlosen Erfassung (21) und dem zweiten Sensor zur kontaktlosen Erfassung (22) eingerichtet ist.

4. Haushaltsgerät nach einem der vorstehenden Ansprüche, wobei:
- die erste räumliche Zone (21A) sich zumindest gegenüber einem ersten Rand der Mensch-Maschine-Schnittstelle befindet,
- die zweite räumliche Zone (22A) sich zumindest gegenüber einem zweiten Rand der Mensch-Maschine-Schnittstelle befindet, der bevorzugt dem ersten Rand gegenüberliegt.

5. Haushaltsgerät nach einem der vorstehenden Ansprüche, wobei der erste Sensor zur kontaktlosen Erfassung (21) und der zweite Sensor zur kontaktlosen Erfassung (22) so eingerichtet sind, dass sie nacheinander ein Körperglied eines Benutzers erfassen, der eine Abtastgeste gegenüber der Mensch-Maschine-Schnittstelle ausführt, sodass zumindest eine Richtung der Abtastbewegung abgeleitet wird.

6. Haushaltsgerät nach einem der vorstehenden Ansprüche, wobei der erste Sensor zur kontaktlosen Erfassung (21) und der zweite Sensor zur kontaktlosen Erfassung (22) so eingerichtet sind, dass sie gleichzeitig ein Körperglied eines Benutzers erfassen, der eine Annäherungs- oder Rückzugsgeste gegenüber mindestens einem, bevorzugt zentralen, Abschnitt der Mensch-Maschine-Schnittstelle ausführen, sodass zumindest eine zur Mensch-Maschine-Schnittstelle senkrechte Annäherungs- oder Rückzugsgestik abgeleitet wird.

7. Haushaltsgerät nach einem der Ansprüche 1 bis 4, wobei die Mensch-Maschine-Schnittstelle eine erste Dimension und eine zweite Dimension aufweist, die bevorzugt kleiner als die erste Dimension ist, und wobei:
- die erste räumliche Zone (21A) mindestens einen Bereich umfasst, der gegenüber der Mensch-Maschine-Schnittstelle eingerichtet und mindestens entlang der ersten Dimension ausgerichtet ist.

8. Haushaltsgerät nach dem vorstehenden Anspruch in Abhängigkeit von Anspruch 2, wobei:
- der erste Sensor zur kontaktlosen Erfassung (21) so eingerichtet ist, dass er entlang einer Richtung der ersten Dimension der Mensch-Maschine-Schnittstelle eine Position eines Körperglieds eines Benutzers in der ersten räumlichen Zone (21A) erfasst,
- der Anzeigebildschirm (10) so eingerichtet ist, dass er einen Cursor oder eine Markierung an einer Position entlang der ersten Dimension der Mensch-Maschine-Schnittstelle anzeigt, die als eine Funktion der Position entlang der Richtung der ersten Dimension der Mensch-Maschine-Schnittstelle des Körperglieds des Benutzers in der ersten räumlichen Zone (21A) berechnet wird.

9. Haushaltsgerät nach dem vorstehenden Anspruch, wobei die Mensch-Maschine-Schnittstelle so eingerichtet ist, dass sie den Cursor oder die Markierung gegenüber dem in der ersten räumlichen Zone (21A) erfassten Körperglied des Benutzers bewegt.

10. Haushaltsgerät nach Anspruch 7 in Abhängigkeit von Anspruch 2 oder nach einem der Ansprüche 8 bis 9, wobei die erste räumliche Zone (21A) zwischen zwei Ebenen liegt, die senkrecht zum Anzeigebildschirm (10) und zur ersten Dimension verlaufen und mindestens um die erste Dimension der Mensch-Maschine-Schnittstelle voneinander beabstandet sind.

11. Haushaltsgerät nach Anspruch 7 in Abhängigkeit von Anspruch 2 oder nach einem der Ansprüche 8 bis 10, wobei die zweite räumliche Zone (22A) mindestens eine Zone abdeckt, die gegenüber dem Haushaltsgerät und entlang einer Ebene senkrecht zur Mensch-Maschine-Schnittstelle eingerichtet ist.

12. Haushaltsgerät nach einem der Ansprüche 1 bis 11, wobei:
- der erste Sensor zur kontaktlosen Erfassung (21) so eingerichtet ist, dass er eine Anwesenheit oder Nähe des Benutzers in einer Zone zwischen der Mensch-Maschine-Schnittstelle und einer Ebene parallel zur Mensch-Maschine-Schnittstelle erfasst, die weniger als 7 cm von der Mensch-Maschine-Schnittstelle, bevorzugt weniger als 5 cm von der Mensch-Maschine-Schnittstelle und noch bevorzugter weniger als 3 cm von der Mensch-Maschine-Schnittstelle entfernt ist
- der zweite Sensor zur kontaktlosen Erfassung (22) so eingerichtet ist, dass er eine Anwesenheit oder Nähe des Benutzers in einer Zone jenseits einer Ebene parallel zur Mensch-Maschine-Schnittstelle erfasst, der mehr als 3 cm von der Mensch-Maschine-Schnittstelle, bevorzugt mehr als 5 cm von der Mensch-Maschine-Schnittstelle und bevorzugter mehr als 7 cm von der Mensch-Maschine-Schnittstelle entfernt ist.

13. Haushaltsgerät nach einem der vorstehenden Ansprüche, wobei mindestens einer von dem ersten Sensor zur kontaktlosen Erfassung (21) und/oder dem zweiten Sensor zur kontaktlosen Erfassung (22) ein Sensor zur räumlichen Tiefenmessung ist, der bevorzugt die Lichtlaufzeit der Infrarotbeleuchtung zwischen einer Infrarotlichtquelle, dem Benutzer und dem Sensor misst, um mindestens einen Abstand zwischen einem Körperglied des Benutzers und dem Sensor abzuleiten.

14. Haushaltsgerät nach einem der vorstehenden Ansprüche, umfassend eine Steuereinheit und mindestens einen Aktuator, wobei die Steuereinheit so eingerichtet ist, dass sie den mindestens einen Aktuator in Abhängigkeit von einer durch den ersten Sensor zur kontaktlosen Erfassung (21) und/oder den zweiten Sensor zur kontaktlosen Erfassung (22) erfassten Anwesenheit oder Nähe zum Benutzer steuert.

15. Haushaltsgerät nach dem vorstehenden Anspruch, wobei die Steuereinheit so eingerichtet ist, dass sie die Steuerung des mindestens einen Aktuators in Abhängigkeit von einem gemessenen Abstand zwischen dem Körperglied des Benutzers und mindestens einem des ersten Sensors zur kontaktlosen Erfassung (21) und/oder des zweiten Sensors zur kontaktlosen Erfassung (22) einstellt.

## Claims

1. Household electrical apparatus, comprising:
- a man-machine interface,
- a first contact-less detection sensor (21) of a presence or of a proximity with a user,
- a second contact-less detection sensor (22) of a presence or of a proximity with a user,
**characterised in that**:
- the first contact-less detection sensor (21) is arranged to detect a presence or a proximity with the user in a first spatial zone (21A) at least partially arranged facing the man-machine interface,
- the second contact-less detection sensor (22) is arranged to detect a presence or a proximity with the user in a second spatial zone (22A) at least partially arranged facing the man-machine interface and comprising at least one separate portion of the first spatial zone (21A).

2. Household electrical apparatus according to the preceding claim, wherein the man-machine interface comprises a display screen (10), and wherein:
- the first spatial zone (21A) is at least partially arranged facing the display screen (10),
- the second spatial zone (22A) is at least partially arranged facing the display screen (10).

3. Household electrical apparatus according to one of the preceding claims, wherein the man-machine interface is arranged between the first contact-less detection sensor (21) and the second contact-less detection sensor (22).

4. Household electrical apparatus according to one of the preceding claims, wherein:
- the first spatial zone (21A) is at least facing a first edge of the man-machine interface,
- the second spatial zone (22A) is at least facing a second edge of the man-machine interface, preferably opposite the first edge.

5. Household electrical apparatus according to one of the preceding claims, wherein the first contact-less detection sensor (21) and the second contact-less detection sensor (22) are arranged to sequentially detect a limb of the user making a sweeping gesture facing the man-machine interface, in such a way as to deduce at least one direction of the sweeping movement.

6. Household electrical apparatus according to one of the preceding claims, wherein the first contact-less detection sensor (21) and the second contact-less detection sensor (22) are arranged to simultaneously detect a limb of the user making a moving towards or away from gesture facing at least one portion, preferably central, of the man-machine interface, in such a way as to deduce at least one moving towards or away from gesture normal to the man-machine interface.

7. Household electrical apparatus according to one of claims 1 to 4, wherein the man-machine interface has a first dimension and a second dimension preferably less than the first dimension, and wherein:
- the first spatial zone (21A) comprises at least one region arranged facing the man-machine interface, oriented at least according to the first dimension.

8. Household electrical apparatus according to the preceding claim, in its dependency with claim 2 wherein:
- the first contact-less detection sensor (21) is arranged to detect, according to a direction of the first dimension of the man-machine interface, a position of a limb of the user in the first spatial zone (21 A),
- the display screen (10) is arranged to display a cursor or a mark at a position according to the first dimension of the man-machine interface, calculated according to the position according to the direction of the first dimension of the man-machine interface of the limb of the user in the first spatial zone (21A).

9. Household electrical apparatus according to the preceding claim, wherein the man-machine interface is arranged to move the cursor or the mark facing the limb of the user detected in the first spatial zone (21A).

10. Household electrical apparatus according to claim 7 in its dependency with claim 2, or according to one of claims 8 to 9, wherein the first spatial zone (21A) is comprised between two planes perpendicular to the display screen (10) and to the first dimension, and separated from one another by at least the first dimension of the man-machine interface.

11. Household electrical apparatus according to claim 7 in its dependency with claim 2, or according to one of claims 8 to 10, wherein the second spatial zone (22A) covers at least one zone arranged facing the household electrical appliance and along a plane perpendicular to the man-machine interface.

12. Household electrical appliance according to one of claims 1 to 11, wherein:
- the first contact-less detection sensor (21) is arranged to detect a presence or a proximity of the user in a zone comprised between the man-machine interface and a plane parallel to the man-machine interface located less than 7 cm from the man-machine interface, preferably less than 5 cm from the man-machine interface, and more preferably less than 3 cm from the man-machine interface
- the second contact-less detection sensor (22) is arranged to detect a presence or a proximity of the user in a zone located beyond a plane parallel to the man-machine interface located more than 3 cm from the man-machine interface, preferably more than 5 cm from the man-machine interface, and more preferably more than 7 cm from the man-machine interface.

13. Household electrical apparatus according to one of the preceding claims, wherein at least one, of the first contact-less detection sensor (21) and/or of the second contact-less detection sensor (22) is a sensor for measuring the spatial depth, preferably measuring a flight time of an infrared illumination between an infrared light source the user and said sensor, in order to deduce therefrom at least one distance between a limb of the user and said sensor.

14. Household electrical apparatus according to one of the preceding claims, comprising a control unit and at least one actuator, the control unit being arranged to control said at least one actuator according to a presence or a proximity with the user, detected by the first contact-less detection sensor (21) and/or the second contact-less detection sensor (22).

15. Household electrical apparatus according to the preceding claim, wherein the control unit is arranged to adjust the control of said at least one actuator according to a distance measured between the limb of the user and at least one of the first contact-less detection sensor (21) and/or of the second contact-less detection sensor (22).
